# EUROPEAN PATENT SPECIFICATION

(11) **EP 3 528 917 B1**
(45) Date of publication and mention of the grant of the patent: **31.08.2022**
(21) Application number: 17797992.9
(22) Date of filing: 17.10.2017
(51) Int. Cl.: B01D 35/06, C02F 1/00, C02F 1/48, B01D 29/58, B01D 35/143, B03C 1/28, F24D 19/00, C02F 101/20, C02F 103/02, B03C 1/033, B01D 35/02

(54) **FILTER FOR TREATING A FLUID IN A PIPE, IN PARTICULAR A PIPE OF A WATER NETWORK, AND OPERATING METHOD THEREOF**
FILTER ZUR BEHANDLUNG EINER FLÜSSIGKEIT IN EINEM ROHR, INSBESONDERE EINES ROHRES EINES WASSERNETZWERKS, UND BETRIEBSVERFAHREN DAFÜR
FILTRE POUR TRAITER UN FLUIDE DANS UNE CONDUITE, EN PARTICULIER UNE CONDUITE D'UN RÉSEAU D'EAU, ET SON PROCÉDÉ DE FONCTIONNEMENT

(30) Priority: 18.10.2016 IT 201600104280
(43) Date of publication of application: 28.08.2019
(73) Proprietor: R.B.M. Ibox S.r.l., 25075 Nave (BS) (IT)
(72) Inventor: BOSSINI, Guido, 25123 Brescia (BS) (IT)
(74) Representative: Metroconsult Srl
(86) International application number: PCT/IB2017/056436
(87) International publication number: WO 2018/073738

(56) References cited:
- EP-A2- 2 524 730
- GB-A- 1 042 563
- US-A- 3 325 009
- US-A1- 2007 090 055
- US-A1- 2011 056 875

## Description

The present invention relates to a filter for treating a fluid in a piping, in particular of a water supply network, according to the preamble of claim 1. A filter of a similar type is disclosed in documents US3325009A, GB1042563A and US2007/090055A1. Furthermore, the present invention relates to a method of operation of said filter.

The present invention relates, in particular, to piping of heating and/or cooling systems, particularly for household and/or industrial use.

In hydronic heating and/or cooling systems, it has become increasingly common to take all possible actions aimed at keeping the heat-transfer fluid as clean as possible (which is normally water, possibly with the addition of glycol or similar substances) and free from impurities that, especially in old systems, usually have a very high concentration of ferrous particles released from system components, particularly from pipes (typically made of iron) and radiators.

Such impurities are circulated by a pump included in the system; therefore, they tend to impair the proper and efficient operation of control elements (e.g. valve components) and also of any heat exchangers included in the generators (e.g. boilers, refrigerators, heat pumps, and so on).

If such impurities are not removed, in the long run they can reduce the efficiency of the system and cause damage to its components, e.g. said control elements, exchangers and generators.

Moreover, such impurities may lead to perforation of the pipes due to corrosion; in fact, the accumulated impurities, in contact with the oxygen that is present in water, will tend to oxidize those parts of the system where they deposit and may cause corrosion of such parts, resulting in a perforated pipe.

For this reason, various techniques and methods exist in the art for removing impurities from the fluid circulating in the piping of a water supply network, in particular a heating and/or cooling system.

A first method requires the use of chemical additives that neutralize said impurities contained in the fluid; however, this technique has some significant drawbacks, in that the presence of such additives must be constantly monitored and the system has to be shut down in order to add more additive when its concentration is insufficient and/or lower than required for effectively removing the impurities.

Another method uses at least one filter associated with a pipe of the water supply network, in particular of a heating and/or cooling system, said filter trapping the impurities contained in the system and being typically associated with a pipe of the return circuit of the system, for protecting the power generator (whether a heating power generator, e.g. a boiler, or a cooling power generator). In particular, according to this other technology, it is known to use a filtering element comprising at least one magnetic element adapted to intercept and trap the ferrous impurities that are present in the fluid to be treated.

It is clear that the filters normally employed for heating and cooling system protection must be periodically maintained, in particular for the purpose of removing the residues of impurities that have accumulated after the heat-transfer fluid has flowed through it many times.

However, the filters known in the art suffer from a few drawbacks, in that they are so designed as to not allow one to know when said maintenance is required for removing the impurities accumulated on said at least one magnetic element of the filtering element, which impair the proper operation of the latter. Another drawback of the filters known in the art is that they are designed in such a way that they cannot be installed in the limited space normally available in modern heating and cooling systems for a filter specifically designed for separating and removing ferrous parts from the heat-transfer fluid; it must be pointed out that this problem is particularly felt in apartments and houses where the power generator (boiler) is placed in suitable wall units that normally do not leave sufficient room for positioning a filter for separating and removing ferrous parts from the heat-transfer fluid.

A further drawback lies in the fact that the filters known in the art are not versatile and do not allow an installer to easily use the same filter in association with different types of power generators and different installation configurations.

In this frame, it is the main object of the present invention to provide a filter for treating a fluid in a piping, in particular of a water supply system, which is so designed as to overcome the drawbacks of the prior art.

In particular, it is one object of the present invention to provide a filter for treating a fluid in a piping, in particular of a water supply network, and a method of operation thereof, which can provide an indication about the quantity of impurities that have accumulated on the filtering element, in particular for the purpose of knowing when maintenance is required in order to remove said impurities.

Therefore, it is an object of the present invention to provide a filter and a method of operation thereof which are so conceived as to ensure optimal operation of the filter and to provide the user with indications about the accumulation of impurities on its filtering element.

It is another object of the present invention to provide a filter for treating a fluid in a piping, in particular of a water supply network, which is so conceived that it can be optimally installed in the limited space available in modern heating and cooling systems.

It is a further object of the present invention to provide a filter for treating a fluid in a piping, in particular of a water supply network, which is versatile and which allows an installer to easily use the same filter with different types of power generators and in different installation configurations.

It is yet another object of the present invention to provide a filter for treating a fluid in a piping, in particular of a water supply network of a heating and/or cooling system, which is so designed that it can be easily subjected to maintenance work for removing the residues of the impurities accumulated thereon after the heat-transfer fluid has flowed through it many times.

Said objects are achieved by the present invention through a filter for treating a fluid in a piping, in particular of a water supply network, and a method of operation thereof, incorporating the features set out in the appended claims, which are an integral part of the present description.

Further objects, features and advantages of the present invention will become apparent from the following detailed description and from the annexed drawings, which are supplied by way of non-limiting explanatory example, wherein:
- Figure 1 is a sectional view of the filter for treating a fluid in a piping, in particular of a water supply network, according to the present invention;
- Figure 2 is a partially exploded sectional view of the filter according to the present invention;
- Figures 3a, 3b and 3c show a perspective view of the filter according to the present invention in first, second and third working conditions, respectively.

In the annexed drawings, reference numeral 1 designates as a whole a filter for treating a fluid in a piping (not shown in the annexed drawings), in particular of a water supply network, according to the present invention. In particular, said water supply network consists of a heating and/or cooling system.

In particular, said filter 1 comprises:
- a main body 10 comprising at least one internal chamber 10A;
- a filtering element (designated as a whole by reference numeral 20) for treating the fluid, said filtering element 20 comprising at least one magnetic element 21 housed at least partially in said chamber 10A and adapted to intercept and trap the ferrous impurities that are present in the fluid to be treated.

In accordance with the present invention, the filter 1 comprises at least one magnetic detector 30 associated with said main body 10 for detecting the magnetic field generated by said at least one magnetic element 21.

In addition, the filter 1 according to the present invention comprises a control unit 40 associated with said at least one magnetic detector 30, said control unit 40 being adapted to process the magnetic field information received from said at least one magnetic detector 30 and to provide an indication about the quantity of impurities that have accumulated on the filtering element 20.

In accordance with the invention, each magnetic detector 30 consists of at least one magnetic sensor adapted to measure the magnetic field generated by said at least one magnetic element In a first embodiment, said at least one magnetic detector 30 may further consist of at least one magnetic switch adapted to detect the state of the magnetic field generated by the said at least one magnetic element 21.

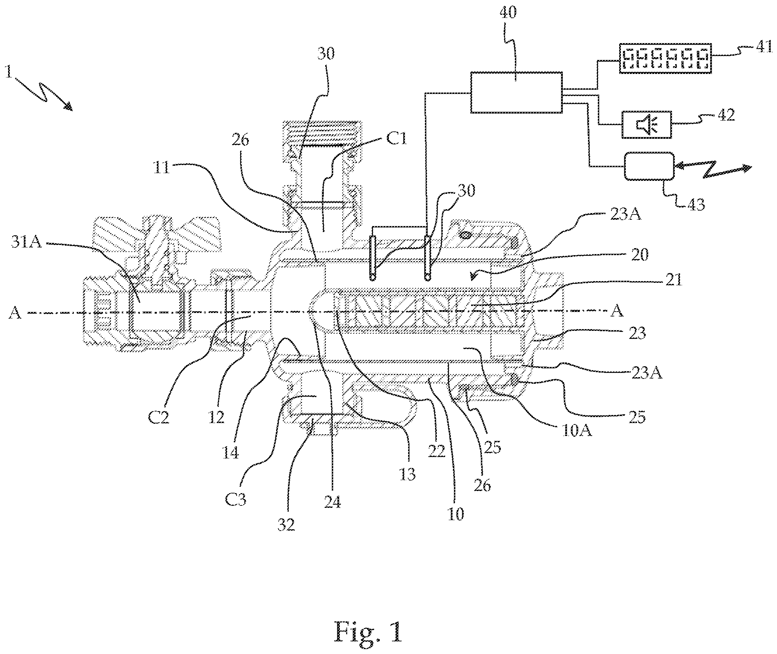

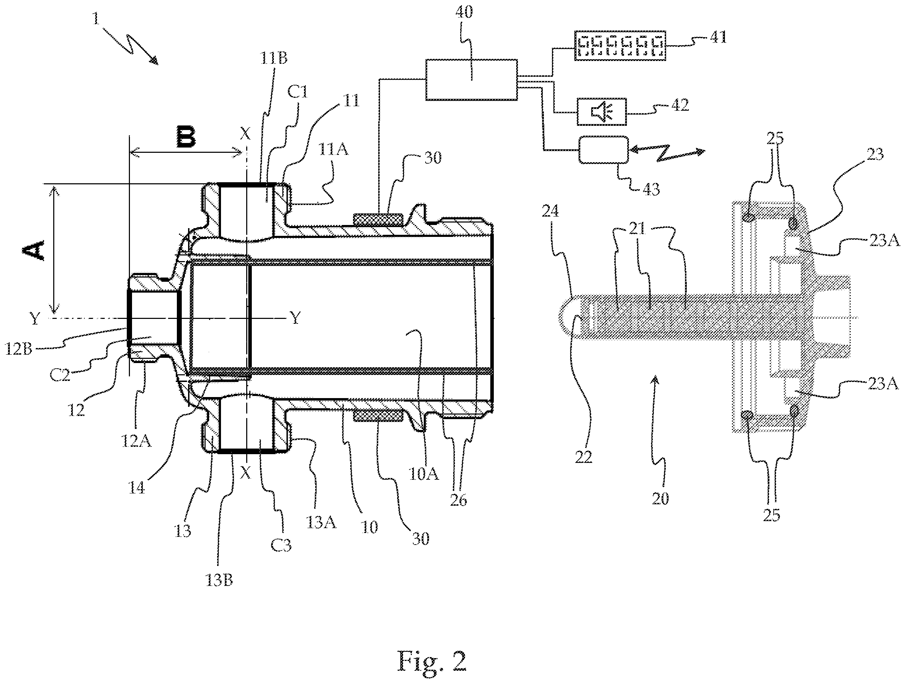

Furthermore, said at least one magnetic detector 30 may be at least partially inserted in the chamber 10A, as shown in the embodiment example of Fig. 1; as an alternative, said at least one magnetic detector 30 may be associated with an outer portion or surface of the main body 10, as in the embodiment example shown in Fig. 2, wherein said at least one magnetic detector 30 is so positioned as to surround and substantially embrace the outer surface of the main body 10; in particular, said at least one magnetic detector 30 may have a substantially arched or annular shape.

Figures 1 and 2 also show that the filter 1 preferably comprises a first signalling device 41 of the video type and/or a second signalling device 42 of the audio type associated with said control unit 40, wherein at least one of said signalling devices 41, 42 is activated by the control unit 40 in order to provide a user with an indication about the quantity of impurities that have accumulated on the filtering element 20.

In particular, said indication may be provided as an alarm signal (of the visual type, when issued by the first signalling device 41, and/or of the audible type, when issued by the second signalling device 42) when the quantity of impurities that have accumulated on the filtering element 20 is such as to require maintenance of the filter 1 in order to remove the impurities.

In addition, the filter 1 according to the present invention preferably comprises transmission/reception means 43 associated with said control unit 40 and adapted to:
- send the indication, processed by said control unit 40, about the quantity of impurities that have accumulated on the filtering element 20 to a remote station (not shown in the drawings), and/or
- respond at any time to an interrogation from said remote station to provide the indication processed by the control unit 40, and/or
- receive instructions from said remote station.

Said remote station, which may be an integral part of a power generator with which the filter 1 is associated, or which may consist of a portable terminal, can thus acquire the indications processed by the control unit 40 pertaining to the clogging condition of the filter 1 and hence decide what actions need to be taken, which may include a notification integrated with an external application (via messaging, e-mail, etc.), sending specific instructions to the transmission/reception means 43 and to the control unit 40 (e.g. instructions for stopping the power generator before the filter 1 becomes totally clogged), and so on.

Preferably, the control unit 40 is associated with power supply means (not shown in the annexed drawings), which may consist, for example, of a battery; furthermore, said at least one magnetic detector 30, the control unit 40, the first signalling device 41 of the video type, the second signalling device 42 of the audio type and the transmission/reception means 43 are preferably mounted on a structure (not shown in the annexed drawings) that may be formed directly on the outer portion or surface of the main body 10 or associated with said outer portion or surface of the main body 10.

The peculiar characteristics of said at least one magnetic detector 30 and of the control unit 40 according to the present invention allow realizing said filter 1 in such a way as to ensure its optimal operation, since the magnetic detector 30 and the control unit 40 continuously provide a user with accurate indications about the accumulation of impurities on the filtering element 20. It is therefore clear that the user, thanks to said indications, is put in a condition to understand when maintenance work is needed for removing the impurities from the filtering element 20 and to readily take action in order to restore the filter 1 to its optimal operating condition.

The filter 1 comprises a plurality of magnetic detectors 30 associated with said main body 10, in particular said magnetic detectors 30 being positioned at different distances from said at least one magnetic element 21 of the filtering element 20. This provision ensures a more accurate and reliable indication about the quantity of impurities that have accumulated on the filtering element 20. In fact, the arrangement of said magnetic detectors 30 at different distances from said at least one magnetic element 21 allows one to understand when the geometric zone concerned by the flux lines generated by the magnetic element 21 tends to get filled with ferrous impurities and, also due to a suitable management logic included in the control unit 40, allows providing the user with an appropriate signal. For example, said signal may be provided by means of a luminous sequence generated by the first signalling device 41 of the video type (e.g. by using light sources with colours ranging from green - to indicate the absence of impurities or a low concentration thereof - to red - to indicate an excessive concentration of impurities on the filtering element 20 - possibly with a plurality of intermediate colours) and/or by means of an audible signal emitted by the second signalling device 42 of the audio type (e.g. said audible signal may be an intermittent signal and/or a signal the intensity of which increases with the concentration of impurities on the filtering element 20). In addition, said signalling may be provided by sending the indication, processed by said control unit 40, about the quantity of impurities that have accumulated on the filtering element to a remote station by means of said transmission/ reception means 43 and/or by responding to an interrogation from a portable terminal or from said remote station; as a result of such signalling, the remote station can acquire the indications processed by the control unit 40, concerning the clogging condition of the filter 1, and can decide accordingly what actions to take (notification integrated with an external application, sending instructions to the transmission/reception means 43 and to the control unit 40 to stop the power generator before the filter 1 becomes totally clogged, and so on). It should be noted that, for simplicity, Figures 1 and 2 respectively show just two magnetic detectors 30 (see Fig. 1) and just one magnetic detector 30 (see Fig. 2); it is however clear that the number of magnetic detectors 30 associated with the main body 10 and/or with the chamber 10A may be greater.

It should also be noted that the principle according to which it is possible to know the concentration level of impurities on the filtering element 20 is based on the fact that the flux lines generated by the magnetic element 21 tend to go through the accumulated ferrous impurities and, when said accumulated ferrous impurities reach the magnetic detector 30 (especially when the latter consists of a magnetic switch), the circuit to which the detector is connected will be closed, thus making it also possible to discriminate between different degrees of clogging.

In accordance with the present invention, the filtering element 20 comprises a plurality of magnetic elements 21, in particular associated with one another in such a way as to form a substantially rod-like shape.

In particular, said plurality of magnetic elements 21 is so arranged as to develop parallel to a longitudinal axis A-A of the filter 1 (said longitudinal axis A-A being indicated in Fig. 1 by means of a dashed-dotted line).

Preferably, the filtering element 20 comprises also the following elements:
- a magnet cartridge 22 adapted to house said at least one magnetic element 21,
- a plug 23 adapted to be secured to the main body 10;
- a sheath 24 adapted to house the magnet cartridge 22 and to be coupled to the plug 23.

In particular, the magnet cartridge 22 and the sheath 24 extend in such a way as to allow said at least one magnetic element 21 to be positioned within the chamber 10A of the main body 10.

Moreover, said sheath 24 is removable, since it can be separated from said magnet cartridge 22 and/or from at least one magnetic element 21 and from the plug 23; also, it is preferably made of plastic material.

The fact that the sheath 24 can be removed facilitates the cleaning of the ferrous residues captured by said at least one magnetic element 21, which cleaning would otherwise be difficult to carry out because of the considerable intensity of the magnetic field generated by said at least one magnetic element 21. Preferably, the filter 1 according to the present invention comprises at least one sealing element 25 (e.g. a gasket) positioned between the plug 23 and the main body 10 to prevent any leakage of fluid from the filter 1.

In particular, the plug 23 is screwed to the main body 10 with the interposition of a pair of sealing elements 25.

The particular provisions of the filtering element 20 according to the present invention allow providing a filter 1 for treating a fluid, in particular in a water supply network, which is so designed as to allow for optimal removal of the impurities contained in a fluid flowing in said water supply network, while also facilitating the maintenance required for removing the residues of the impurities accumulated after the heat-transfer fluid has flowed through it many times.

It must be pointed out that the filter 1 according to the present invention may also comprise a second filtering element 26, in particular of the mesh type, positioned in the chamber 10A; in particular, said second filtering element 26 allows the fluid to be subjected to an additional filtering action in order to trap the non-ferromagnetic impurities that might escape from the action of the magnetic field exerted by the magnetic filtering element 20.

In a preferred embodiment, said second filtering element 26 has a substantially tubular shape; in particular, the second filtering element 26 is so positioned as to embrace or enclose the assembly consisting of the filtering element 20, the magnet cartridge 22 and the sheath 24.

Advantageously, the main body 10 comprises a wall 14 that extends parallel to the longitudinal axis A-A of the filter 1, so as to mate with a tract of the second filtering element 26 and allow it to be correctly positioned within the chamber 10A.

In particular, the wall 14 is also substantially tubular in shape and may have:
- a slightly smaller section (as shown in Fig. 1) than that of the second filtering element 26, so that said wall 14 can be inserted into an initial tract of the second filtering element 26, or
- a slightly greater section (as shown in Fig. 2) than that of the second filtering element 26, so that said wall 14 can be slipped over the initial tract of the second filtering element 26.

Moreover, the plug 23 is preferably so shaped as to comprise a recess 23A (in particular having a substantially circular shape in a front view, i.e. when viewed in a direction parallel to the axis A-A of the filter 1), which is adapted to house a terminal portion of the second filtering element 26 and allow it to be correctly positioned within the chamber 10A, in particular in co-operation with the wall 14.

In accordance with a preferred embodiment of the filter 1 according to the present invention, the main body 10 comprises a first mouth 11, a second mouth 12 and a third mouth 13, which have substantially the same shape.

As can be seen in Figures 1 and 2, said first mouth 11, second mouth 12 and third mouth 13 comprise, respectively, a first duct C1, a second duct C2 and a third duct C3, which allow the fluid to enter and/or exit the chamber 10A.

In particular, a first side 11A of the first mouth 11, a second side 12A of the second mouth 12 and a third side 13A of the third mouth 13 are made in substantially the same manner in terms of dimensions and shape; it should be noted that, in the present description, the term "side" refers to that surface of the mouths 11, 12, 13 which is opposite to that which faces the first duct C1, the second duct C2 and the third duct C3, respectively.

Moreover, the first mouth 11, the second mouth 12 and the third mouth 13 comprise similar connection means; for example, said connection means may consist of identical threads on the sides 11A, 12A, 13A of said first mouth 11, second mouth 12 and third mouth 13.

In a preferred embodiment, the first mouth 11, the second mouth 12 and the third mouth 13 are positioned on the main body 10 in such a way as to lie in substantially the same longitudinal plane, said longitudinal plane being parallel to a longitudinal axis A-A (visible in Fig. 1) of the filter 1; this feature of the mouths 11, 12, 13 can be observed in Figures 1 and 2, which show a longitudinal section of the filter 1, i.e. according to a longitudinal plane parallel to said longitudinal axis A-A of the filter 1.

In addition, the first mouth 11 and the third mouth 13 are positioned on the main body 10 on opposite sides relative to the chamber 10A and in such a way as to have first longitudinal axes X substantially coinciding with each other (note that said first longitudinal axes X are substantially perpendicular to said longitudinal axis A-A of the filter 1); therefore, in the sectional view of Fig. 2, the first longitudinal axes X of the first mouth 11 and third mouth 13 are obviously represented as one axis X.

In this embodiment, the second mouth 12 is positioned on the main body 10 in such a way as to have a second longitudinal axis Y substantially perpendicular to the first longitudinal axes X of the first mouth 11 and third mouth 13; therefore, the second longitudinal axis Y is substantially parallel to (and may also coincide with) said longitudinal axis A-A of the filter 1.

In a preferred embodiment (shown in Fig. 2), the first mouth 11, the second mouth 12 and the third mouth 13 are located on the main body 10 in such a way that the ratio between:
- a first distance A, measured between the second axis Y and a straight line passing through a first inlet section 11B of the first mouth 11, and
- a second distance B, measured between the first axis X and a straight line passing through a second inlet section 12B of the second mouth 12,

lies within a range of values from a minimum value of 0.8 to a maximum value of 1.2, in particular said first distance A and second distance B being shorter than 50 mm.

It is clear that said distance A may also be a distance between the second axis Y and a straight line passing through a third inlet section 13B of the third mouth 13. Furthermore, said distance B may also be a distance between the first axis X of the third mouth 13 and a straight line passing through said second inlet section 12B of the second mouth 12, since the first mouth 11 and the third mouth 13 have substantially coinciding first longitudinal axes X.

Preferably, the main body 10 has a substantially cylindrical shape; in this embodiment, the first mouth 11 and the third mouth 13 are positioned on the side surface of the main body 10, whereas the second mouth 12 is positioned at one end (or base) of the substantially cylindrical main body 10.

The peculiar features of the filter 1 according to the present invention make said filter 1 suitable for optimal installation in the limited space available in modern heating and cooling systems.

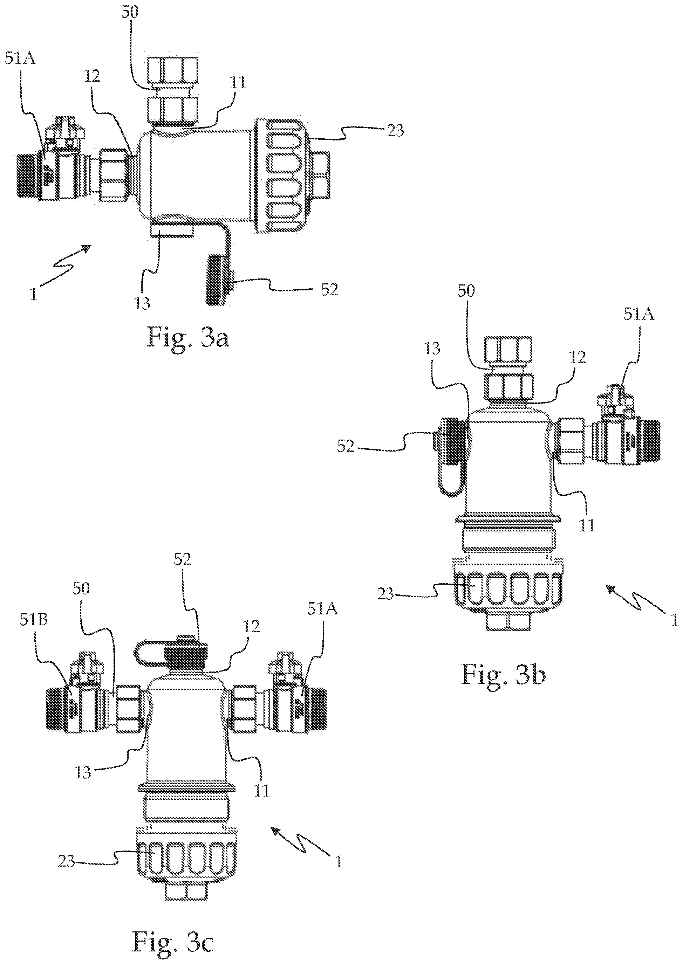

In fact, as can be observed in Figures 3a to 3c, the filter 1 according to the present invention can be used without distinction:
- in a first configuration (shown in Figures 1 and 3a), wherein the first mouth 11 is associated with a duct 50 (in particular for delivering the fluid towards a power generator, not shown), the second mouth 12 is associated with a first on-off valve 51A that allows stopping the flow of fluid towards the filter 1, the third mouth 13 is associated with a closing element 52 (which in Fig. 3a is shown in a condition in which it leaves the third mouth 13 open, i.e. a condition in which the fluid can be drained from a power generator and/or system through the third mouth 13);
- in a second configuration (shown in Fig. 3b), wherein the first mouth 11 is associated with the first on-off valve 51A, which allows stopping the flow of fluid towards the filter 1, the second mouth 12 is associated with the duct 50 for delivering the fluid towards a power generator, the third mouth 13 is associated with the closing element 52;
- in a third configuration (shown in Fig. 3c), wherein the first mouth 11 is associated with the first on-off valve 51A, which allows stopping the flow of fluid towards the filter 1, the second mouth 12 is associated with the closing element 52, the third mouth 13 is associated with the duct 50 for delivering the fluid towards a power generator; said duct 50 and/or said third mouth 13 may possibly be associated with a second on-off valve 51B.

It should be noted that in the first configuration (Fig. 3a) the filter 1 and the filtering element 20 are positioned substantially horizontally, whereas in the second and third configurations (Figs. 3b and 3c) they are directed substantially downwards.

Therefore, the provisions of the present invention allow providing a filter 1 that turns out to be very versatile, in that such provisions will allow an installer to easily and readily use the filter 1 with different types of power generators and in different installation configurations.

As previously described, the main body 10 has a substantially cylindrical shape; in this embodiment, the plug 23 of the filtering element 20 is secured at one end of the main body 10, opposite to that with which the second mouth 12 is associated.

In Figures 1 and 2 it can also be observed that the second filtering element 26 is so arranged as to surround the inlet portion of the second duct C2 in the chamber 10A and to extend parallel to the longitudinal axis A-A (visible in Fig. 1) of the filter 1 until it comes in contact with the plug 23.

Advantageously, the wall 14 is so positioned in the chamber 10A as to surround the inlet portion of the second duct C2 in said chamber 10A.

The following will briefly describe a method of operation of a filter 1 for treating a fluid in a piping, in particular of a water supply network, said filter 1 comprising:
- a main body 10 comprising at least one internal chamber 10A;
- a filtering element 20 for treating the fluid, said filtering element 20 comprising at least one magnetic element 21 housed at least partially in said chamber 10A and adapted to intercept and trap the ferrous impurities that are present in the fluid to be treated.

According to the present invention, said method comprises the following steps:
a) detecting the magnetic field generated by said at least one magnetic element 21 through at least one magnetic detector 30 associated with said main body 10;
b) processing the information about the detected magnetic field, received from said at least one magnetic detector 30, by means of a control unit 40 associated with said at least one magnetic detector 30;
c) providing an indication about the quantity of impurities that have accumulated on the filtering element 20 by means of said control unit 40.

In accordance with the present invention, said step c) can be carried out through a step c1), wherein said control unit 40 activates (whether directly or indirectly) a first signalling device 41 of the video type and/or a second signalling device 42 of the audio type in order to provide a user with said indication about the quantity of impurities that have accumulated on the filtering element 20.

In particular, said indication may be provided as an alarm signal (of the visual type, when issued by the first signalling device 41, and/or of the audible type, when issued by the second signalling device 42) when the quantity of impurities that have accumulated on the filtering element 20 is such as to require maintenance of the filter 1 in order to remove the impurities.

Furthermore, said step c) can be carried out through a step c2), wherein said control unit 40 activates (whether directly or indirectly) transmission/reception means 43 in order to:
- send the indication, processed by said control unit 40, about the quantity of impurities that have accumulated on the filtering element 20 to a remote station, and/or
- respond at any time to an interrogation from said remote station to provide said indication processed by the control unit 40, and/or
- receive instructions from said remote station.

Preferably, said step a) of measuring the magnetic field is carried out through a plurality of magnetic detectors 30 associated with said main body 10; in particular, said magnetic detectors 30 being positioned at different distances from said at least one magnetic element 21 of the filtering element 20.

The features of the filter 1 according to the present invention, as well as the advantages thereof, are apparent from the above description.

In fact, the peculiar features of the filter 1 according to the present invention allow realizing said filter 1 in such a way as to ensure optimal operation thereof, since the magnetic detector 30 and the control unit 40 continuously provide the user with accurate indications about the accumulation of impurities on the filtering element 20. It is therefore apparent that the user, thanks to said indications, is put in a condition to know and understand when maintenance is necessary for removing the impurities from the filtering element 20 and to readily take action in order to restore the filter 1 to its optimal operating condition.

Moreover, by realizing the filter 1 in such a way that it comprises a plurality of magnetic detectors 30 associated with said chamber 10A, in particular said magnetic detectors 30 being positioned at different distances from said at least one magnetic element 21 of the filtering element 20, a more accurate and reliable indication can be obtained as concerns the quantity of impurities that have accumulated on the filtering element 20.

It should also be noted that the provisions of the present invention allow realizing said filter 1 in such a way that it can be optimally installed in the limited space available in modern heating and cooling systems.

Furthermore, the provisions of the present invention allow providing a filter 1 that turns out to be very versatile, in that such provisions will allow an installer to easily and readily use the filter 1 with different types of power generators and in different installation configurations.

The particular conformation of the filter 1 according to the present invention also facilitates the maintenance work required for removing the residues of the impurities that have accumulated after the heat-transfer fluid has flowed through it many times.

## Claims

1. Filter (1) for treating a fluid in a piping, in particular of a water supply network, said filter (1) comprising:
- a main body (10) comprising at least one internal chamber (10A);
- a filtering element (20) for treating the fluid, said filtering element (20) comprising at least one magnetic element (21) housed at least partially in said chamber (10A) and adapted to intercept and trap the ferrous impurities that are present in the fluid to be treated,
**characterized in that**
said filter (1) comprises:
- at least one magnetic detector (30) associated with said main body (10) for detecting the magnetic field generated by said at least one magnetic element (21), said at least one magnetic detector (30) consisting of at least one magnetic sensor adapted to measure the magnetic field generated by said at least one magnetic element (21);
- a control unit (40) associated with said at least one magnetic sensor, said control unit (40) being adapted to process the magnetic field information received from said at least one magnetic sensor and to provide an indication about the quantity of impurities that have accumulated on the filtering element (20).

2. Filter (1) according to claim 1, **characterized in that** it comprises a first signalling device (41) of the video type and/or a second signalling device (42) of the audio type associated with said control unit (40), wherein at least one of said signalling devices (41, 42) is activated by the control unit (40) in order to provide a user with an indication about the quantity of impurities that have accumulated on the filtering element (20).

3. Filter (1) according to one or more of the preceding claims, **characterized in that** it comprises transmission/reception means (43) associated with said control unit (40) and adapted to:
- send the indication, processed by said control unit (40), about the quantity of impurities that have accumulated on the filtering element (20) to a remote station, and/or
- respond at any time to an interrogation from said remote station to provide said indication processed by the control unit (40), and/or
- receive instructions from said remote station.

4. Filter (1) according to one or more of the preceding claims, **characterized in that** it comprises a plurality of magnetic detectors (30) associated with said main body (10), in particular said magnetic detectors (30) being positioned at different distances from said at least one magnetic element (21) of the filtering element (20).

5. Filter (1) according to one or more of the preceding claims, **characterized in that** said filtering element (20) comprises a plurality of magnetic elements (21), in particular associated with one another in such a way as to form a substantially rod-like shape.

6. Filter (1) according to claim 5, **characterized in that** said plurality of magnetic elements (21) is so arranged as to develop parallel to a longitudinal axis (A-A) of the filter (1).

7. Filter (1) according to one or more of claims 5 and 6, **characterized in that** said filtering element (20) comprises the following elements:
- a magnet cartridge (22) adapted to house said plurality of magnetic elements (21);
- a plug (23) adapted to be secured to the main body (10);
- a sheath (24), in particular of the removable type, adapted to house the magnet cartridge (22) and to be coupled to the plug (23).

8. Filter (1) according to one or more of the preceding claims, **characterized in that** said main body (10) comprises a first mouth (11), a second mouth (12) and a third mouth (13) having substantially the same shape, wherein said first mouth (11), second mouth (12) and third mouth (13) comprise, respectively, a first duct (C1), a second duct (C2) and a third duct (C3) that allow the fluid to enter and/or exit the chamber (10A).

9. Filter (1) according to claim 8, **characterized in that** a first side (11A) of the first mouth (11), a second side (12A) of the second mouth (12) and a third side (13A) of the third mouth (13) are made in substantially the same manner in terms of dimensions and shape, in particular said first mouth (11), second mouth (12) and third mouth (13) comprising similar connection means.

10. Filter (1) according to one or more of the preceding claims 8 and 9, **characterized in that** the first mouth (11), the second mouth (12) and the third mouth (13) are located on the main body (10) in such a way as to lie in substantially the same longitudinal plane, said longitudinal plane being parallel to a longitudinal axis (A-A) of the filter (1), in particular the first mouth (11) and the third mouth (13) being positioned on the main body (10) on opposite sides relative to the chamber (10A) and in such a way as to have first longitudinal axes (X) substantially coinciding with each other, and the second mouth (12) being positioned on the main body (10) in such a way as to have a second longitudinal axis (Y) substantially perpendicular to the first longitudinal axes (X) of the first mouth (11) and third mouth (13).

11. Filter (1) according to claim 10, **characterized in that** the first mouth (11), the second mouth (12) and the third mouth (13) are positioned on the main body (10) in such a way that the ratio between:
- a first distance (A), measured between the second axis (Y) and a straight line passing through a first inlet section (11B) of the first mouth (11), and
- a second distance (B), measured between the first axis (X) and a straight line passing through a second inlet section (12B) of the second mouth (12), lies within a range of values from a minimum value of 0.8 to a maximum value of 1.2, in particular said first distance (A) and second distance (B) being shorter than 50 mm.

12. Filter (1) according to one or more of the preceding claims 8 to 11, **characterized in that** said main body (10) has a substantially cylindrical shape, wherein the first mouth (11) and the third mouth (13) are located on the side surface of the main body (10), whereas the second mouth (12) is located at one end of the substantially cylindrical main body (10).

13. Method of operation of a filter (1) for treating a fluid in a piping, in particular of a water supply network, said filter (1) comprising:
- a main body (10) comprising at least one internal chamber (10A);
- a filtering element (20) for treating the fluid, said filtering element (20) comprising at least one magnetic element (21) housed at least partially in said chamber (10A) and adapted to intercept and trap the ferrous impurities that are present in the fluid to be treated,
**characterized in that**
said method comprises the following steps:
a) measuring the magnetic field generated by said at least one magnetic element (21) through at least one magnetic detector (30) consisting of at least one magnetic sensor associated with said main body (10);
b) processing the information about the measured magnetic field, received from said at least one magnetic sensor, by means of a control unit (40) associated with said at least one magnetic sensor;
c) providing an indication about the quantity of impurities that have accumulated on the filtering element (20) by means of said control unit (40).

14. Method according to claim 13, **characterized in that** said step c) is carried out through a step c1), wherein said control unit (40) activates a first signalling device (41) of the video type and/or a second signalling device (42) of the audio type in order to provide a user with said indication about the quantity of impurities that have accumulated on the filtering element (20).

15. Method according to one or more of claims 13 and 14, **characterized in that** said step c) is carried out through a step c2), wherein said control unit (40) activates transmission/reception means (43) in order to:
- send the indication, processed by said control unit (40), about the quantity of impurities that have accumulated on the filtering element (20) to a remote station, and/or
- respond at any time to an interrogation from said remote station to provide said indication processed by the control unit (40), and/or
- receive instructions from said remote station.

## Patentansprüche

1. Filter (1) zur Behandlung eines Fluids in einer Rohrleitung, insbesondere eines Wasserversorgungsnetzes, wobei der Filter (1) umfasst:
- einen Hauptkörper (10), der mindestens eine innere Kammer (10A) umfasst;
- ein Filterelement (20) zur Behandlung des Fluids, wobei das Filterelement (20) mindestens ein magnetisches Element (21) umfasst, das mindestens teilweise in der Kammer (10A) untergebracht ist und geeignet ist, die eisenhaltigen Verunreinigungen, die in dem zu behandelnden Fluid vorhanden sind, abzufangen und einzufangen,
**dadurch gekennzeichnet, dass**
der Filter (1) umfasst:
- mindestens einen magnetischen Detektor (30), der mit dem Hauptkörper (10) verbunden ist, um das von dem mindestens einen magnetischen Element (21) erzeugte Magnetfeld zu erfassen, wobei der mindestens eine magnetische Detektor (30) aus mindestens einem Magnetsensor besteht, der angepasst ist, dass er das von dem mindestens einen magnetischen Element (21) erzeugte Magnetfeld misst;
- eine Steuereinheit (40), die mit dem mindestens einen Magnetsensor verbunden ist, wobei die Steuereinheit (40) angepasst ist, um von dem mindestens einen Magnetsensor Magnetfeldinformationen zu verarbeiten und eine Angabe über die Menge der Verunreinigungen zu machen, die sich auf dem Filterelement (20) angesammelt haben.

2. Filter (1) nach Anspruch 1, **dadurch gekennzeichnet, dass** er eine erste Signalisierungsvorrichtung (41) vom Video-Typ und/oder eine zweite Signalisierungsvorrichtung (42) vom Audio-Typ umfasst, die mit der Steuereinheit (40) verbunden ist, wobei mindestens eine der Signalisierungsvorrichtungen (41, 42) von der Steuereinheit (40) aktiviert wird, um einem Benutzer eine Angabe über die Menge an Verunreinigungen zu geben, die sich auf dem Filterelement (20) angesammelt haben.

3. Filter (1) nach einem oder mehreren der vorhergehenden Ansprüche, **dadurch gekennzeichnet, dass** er Sende-/Empfangsmittel (43) umfasst, die mit der Steuereinheit (40) verbunden und geeignet sind:
- die von der Steuereinheit (40) verarbeitete Angabe über die Menge der Verunreinigungen, die sich auf dem Filterelement (20) angesammelt haben, an eine entfernte Station zu senden, und/oder
- jederzeit auf eine Abfrage von der entfernten Station zu reagieren, um die von der Steuereinheit (40) verarbeitete Angabe bereitzustellen, und/oder
- Anweisungen von der entfernten Station zu empfangen.

4. Filter (1) nach einem oder mehreren der vorhergehenden Ansprüche, **dadurch gekennzeichnet, dass** es mehrere magnetische Detektoren (30) umfasst, die mit dem Hauptkörper (10) verbunden sind, wobei insbesondere die magnetischen Detektoren (30) in unterschiedlichen Abständen von dem mindestens einen magnetischen Element (21) des Filterelements (20) angeordnet sind.

5. Filter (1) nach einem oder mehreren der vorhergehenden Ansprüche, **dadurch gekennzeichnet, dass** das Filterelement (20) mehrere magnetische Elemente (21) umfasst, die insbesondere so miteinander verbunden sind, dass sie eine im Wesentlichen stabförmige Form bilden.

6. Filter (1) nach Anspruch 5, **dadurch gekennzeichnet, dass** die mehreren magnetischen Elemente (21) so angeordnet sind, dass sie sich parallel zu einer Längsachse (A-A) des Filters (1) entwickeln.

7. Filter (1) nach einem oder mehreren der Ansprüche 5 und 6, **dadurch gekennzeichnet, dass** das Filterelement (20) die folgenden Elemente umfasst:
- eine Magnetpatrone (22), die geeignet ist, die mehreren magnetischen Elemente (21) aufzunehmen;
- einen Stopfen (23), der an dem Hauptkörper (10) befestigt werden kann;
- eine Hülle (24), insbesondere vom abnehmbaren Typ, die angepasst ist, die Magnetpatrone (22) aufzunehmen und mit dem Stopfen (23) verbunden zu werden.

8. Filter (1) nach einem oder mehreren der vorhergehenden Ansprüche, **dadurch gekennzeichnet, dass** der Hauptkörper (10) eine erste Mündung (11), eine zweite Mündung (12) und eine dritte Mündung (13) umfasst, die im Wesentlichen die gleiche Form haben, wobei die erste Mündung (11), die zweite Mündung (12) und die dritte Mündung (13) jeweils einen ersten Kanal (C1), einen zweiten Kanal (C2) und einen dritten Kanal (C3) umfassen, die es dem Fluid ermöglichen, in die Kammer (10A) einzutreten und/oder sie zu verlassen.

9. Filter (1) nach Anspruch 8, **dadurch gekennzeichnet, dass** eine erste Seite (11A) der ersten Mündung (11), eine zweite Seite (12A) der zweiten Mündung (12) und eine dritte Seite (13A) der dritten Mündung (13) im Wesentlichen auf die gleiche Weise in Bezug auf Abmessungen und Form hergestellt sind, wobei insbesondere die erste Mündung (11), die zweite Mündung (12) und die dritte Mündung (13) ähnliche Verbindungsmittel umfassen.

10. Filter (1) nach einem oder mehreren der vorhergehenden Ansprüche 8 und 9, **dadurch gekennzeichnet, dass** die erste Mündung (11), die zweite Mündung (12) und die dritte Mündung (13) auf dem Hauptkörper (10) so angeordnet sind, dass sie im Wesentlichen in der gleichen Längsebene liegen, wobei die Längsebene parallel zu einer Längsachse (A-A) des Filters (1) verläuft, insbesondere die erste Mündung (11) und die dritte Mündung (13) auf dem Hauptkörper (10) auf gegenüberliegenden Seiten in Bezug auf die Kammer (10A) angeordnet sind, so dass sie erste Längsachsen (X) haben, die im Wesentlichen miteinander übereinstimmen, und die zweite Mündung (12) auf dem Hauptkörper (10) so angeordnet ist, dass sie eine zweite Längsachse (Y) hat, die im Wesentlichen senkrecht zu den ersten Längsachsen (X) der ersten Mündung (11) und der dritten Mündung (13) verläuft.

11. Filter (1) nach Anspruch 10, **dadurch gekennzeichnet, dass** die erste Mündung (11), die zweite Mündung (12) und die dritte Mündung (13) so am Hauptkörper (10) angeordnet sind, dass das Verhältnis zwischen:
- einem ersten Abstand (A), gemessen zwischen der zweiten Achse (Y) und einer Geraden, die durch einen ersten Einlassabschnitt (11B) der ersten Mündung (11) verläuft, und
- einem zweiten Abstand (B), gemessen zwischen der ersten Achse (X) und einer Geraden, die durch einen zweiten Einlassabschnitt (12B) der zweiten Mündung (12) verläuft, innerhalb eines Wertebereichs von einem Minimalwert von 0,8 bis zu einem Maximalwert von 1,2 liegt, wobei insbesondere der erste Abstand (A) und der zweite Abstand (B) kürzer als 50 mm sind.

12. Filter (1) nach einem oder mehreren der vorhergehenden Ansprüche 8 bis 11, **dadurch gekennzeichnet, dass** der Hauptkörper (10) eine im Wesentlichen zylindrische Form aufweist, wobei die erste Mündung (11) und die dritte Mündung (13) an der Seitenfläche des Hauptkörpers (10) angeordnet sind, während die zweite Mündung (12) an einem Ende des im Wesentlichen zylindrischen Hauptkörpers (10) angeordnet ist.

13. Verfahren zum Betrieb eines Filters (1) zur Behandlung eines Fluids in einer Rohrleitung, insbesondere eines Wasserversorgungsnetzes, wobei der Filter (1) umfasst:
- einen Hauptkörper (10), der mindestens eine Innenkammer (10A) aufweist;
- ein Filterelement (20) zur Behandlung des Fluids, wobei das Filterelement (20) mindestens ein magnetisches Element (21) umfasst, das mindestens teilweise in der Kammer (10A) untergebracht ist und geeignet ist, die eisenhaltigen Verunreinigungen, die in dem zu behandelnden Fluid vorhanden sind, abzufangen und einzufangen,
**dadurch gekennzeichnet, dass**
das Verfahren die folgenden Schritte umfasst:
a) Messen des von dem mindestens einen magnetischen Element (21) erzeugten Magnetfeldes durch mindestens einen magnetischen Detektor (30), der aus mindestens einem mit dem Hauptkörper (10) verbundenen Magnetsensor besteht;
b) Verarbeiten der Informationen über das gemessene Magnetfeld, die von dem mindestens einen Magnetsensor empfangen werden, mittels einer Steuereinheit (40), die mit dem mindestens einen Magnetsensor verbunden ist
c) Bereitstellen einer Angabe über die Menge der Verunreinigungen, die sich auf dem Filterelement (20) angesammelt haben, mittels der Steuereinheit (40).

14. Verfahren nach Anspruch 13, **dadurch gekennzeichnet, dass** der Schritt c) durch einen Schritt c1) ausgeführt wird, bei dem die Steuereinheit (40) eine erste Signalisierungsvorrichtung (41) vom Video-Typ und/oder eine zweite Signalisierungsvorrichtung (42) vom Audio-Typ aktiviert, um einem Benutzer die Angabe über die Menge an Verunreinigungen zu liefern, die sich auf dem Filterelement (20) angesammelt haben.

15. Verfahren nach einem oder mehreren der Ansprüche 13 und 14, **dadurch gekennzeichnet, dass** der Schritt c) durch einen Schritt c2) ausgeführt wird, wobei die Steuereinheit (40) Sende-/Empfangsmittel (43) aktiviert, um:
- die von der Steuereinheit (40) verarbeitete Angabe über die Menge der Verunreinigungen, die sich auf dem Filterelement (20) angesammelt haben, an eine entfernte Station zu senden, und/oder
- jederzeit auf eine Abfrage der entfernten Station zu reagieren, um die von der Steuereinheit (40) verarbeitete Angabe zu liefern, und/oder
- Anweisungen von der entfernten Station zu empfangen.

## Revendications

1. - Filtre (1) pour le traitement d'un fluide dans une tuyauterie, en particulier d'un réseau d'alimentation d'eau, ledit filtre (1) comprenant :
- un corps principal (10) comprenant au moins une chambre interne (10A) ;
- un élément filtrant (20) pour traiter le fluide, ledit élément filtrant (20) comprenant au moins un élément magnétique (21) reçu au moins partiellement dans ladite chambre (10A) et agencé pour intercepter et piéger les impuretés ferreuses qui sont présentes dans le fluide à traiter,
**caractérisé par le fait que**
ledit filtre (1) comprend :
- au moins un détecteur magnétique (30) associé audit corps principal (10) pour détecter le champ magnétique généré par ledit au moins un élément magnétique (21), ledit au moins un détecteur magnétique (30) consistant en au moins un capteur magnétique agencé pour mesurer le champ magnétique généré par ledit au moins un élément magnétique (21) ;
- une unité de commande (40) associée audit au moins un capteur magnétique, ladite unité de commande (40) étant agencée pour traiter les informations de champ magnétique reçues en provenance dudit au moins un capteur magnétique et pour fournir une indication sur la quantité d'impuretés qui se sont accumulées sur l'élément filtrant (20).

2. - Filtre (1) selon la revendication 1, **caractérisé par le fait qu'**il comprend un premier dispositif de signalisation (41) du type vidéo et/ou un second dispositif de signalisation (42) du type audio associé à ladite unité de commande (40), au moins un desdits dispositifs de signalisation (41, 42) étant activé par l'unité de commande (40) afin de fournir à un utilisateur une indication sur la quantité d'impuretés qui se sont accumulées sur l'élément filtrant (20).

3. - Filtre (1) selon une ou plusieurs des revendications précédentes, **caractérisé par le fait qu'**il comprend des moyens d'émission/réception (43) associés à ladite unité de commande (40) et agencés pour :
- envoyer l'indication, traitée par ladite unité de commande (40), sur la quantité d'impuretés qui se sont accumulées sur l'élément filtrant (20) à une station distante, et/ou
- répondre à tout moment à une interrogation de ladite station distante pour fournir ladite indication traitée par l'unité de commande (40), et/ou
- recevoir des instructions en provenance de ladite station distante.

4. - Filtre (1) selon une ou plusieurs des revendications précédentes, **caractérisé par le fait qu'**il comprend une pluralité de détecteurs magnétiques (30) associés audit corps principal (10), en particulier lesdits détecteurs magnétiques (30) étant positionnés à différentes distances dudit au moins un élément magnétique (21) de l'élément filtrant (20).

5. - Filtre (1) selon une ou plusieurs des revendications précédentes, **caractérisé par le fait que** ledit élément filtrant (20) comprend une pluralité d'éléments magnétiques (21), en particulier associés les uns aux autres de façon à former une forme sensiblement en bâton.

6. - Filtre (1) selon la revendication 5, **caractérisé par le fait que** ladite pluralité d'éléments magnétiques (21) sont disposés de façon à se développer parallèlement à un axe longitudinal (A-A) du filtre (1).

7. - Filtre (1) selon une ou plusieurs des revendications 5 et 6, **caractérisé par le fait que** ledit élément filtrant (20) comprend les éléments suivants :
- une cartouche d'aimant (22) agencée pour recevoir ladite pluralité d'éléments magnétiques (21) ;
- une fiche (23) agencée pour être fixée au corps principal (10) ;
- une gaine (24), en particulier du type amovible, agencée pour recevoir la cartouche d'aimant (22) et pour être couplée à la fiche (23).

8. - Filtre (1) selon une ou plusieurs des revendications précédentes, **caractérisé par le fait que** ledit corps principal (10) comprend un premier embout (11), un deuxième embout (12) et un troisième embout (13) ayant sensiblement la même forme, ledit premier embout (11), ledit deuxième embout (12) et ledit troisième embout (13) comprenant, respectivement, un premier conduit (CI), un deuxième conduit (C2) et un troisième conduit (C3) qui permettent au fluide d'entrer et/ou de sortir de la chambre (10A) .

9. - Filtre (1) selon la revendication 8, **caractérisé par le fait qu'**un premier côté (11A) du premier embout (11), un deuxième côté (12A) du deuxième embout (12) et un troisième côté (13A) du troisième embout (13) sont réalisés sensiblement de la même manière en termes de dimensions et de forme, en particulier ledit premier embout (11), ledit deuxième embout (12) et ledit troisième embout (13) comprenant des moyens de liaison analogues.

10. - Filtre (1) selon une ou plusieurs des revendications précédentes 8 et 9, **caractérisé par le fait que** le premier embout (11), le deuxième embout (12) et le troisième embout (13) sont situés sur le corps principal (10) de façon à se trouver sensiblement dans le même plan longitudinal, ledit plan longitudinal étant parallèle à un axe longitudinal (A-A) du filtre (1), en particulier le premier embout (11) et le troisième embout (13) étant positionnés sur le corps principal (10) sur des côtés opposés par rapport à la chambre (10A) et de façon à avoir des premiers axes longitudinaux (X) coïncidant sensiblement les uns avec les autres, et le deuxième embout (12) étant positionné sur le corps principal (10) de façon à avoir un deuxième axe longitudinal (Y) sensiblement perpendiculaire aux premiers axes longitudinaux (X) du premier embout (11) et du troisième embout (13).

11. - Filtre (1) selon la revendication 10, **caractérisé par le fait que** le premier embout (11), le deuxième embout (12) et le troisième embout (13) sont positionnés sur le corps principal (10) de telle sorte que le rapport entre :
- une première distance (A), mesurée entre le deuxième axe (Y) et une ligne droite passant par une première section d'entrée (11B) du premier embout (11), et
- une seconde distance (B), mesurée entre le premier axe (X) et une ligne droite passant par une seconde section d'entrée (12B) du deuxième embout (12),
se situe dans une plage de valeurs allant d'une valeur minimale de 0,8 à une valeur maximale de 1,2, en particulier ladite première distance (A) et ladite seconde distance (B) étant plus courtes que 50 mm.

12. - Filtre (1) selon une ou plusieurs des revendications précédentes 8 à 11, **caractérisé par le fait que** ledit corps principal (10) a une forme sensiblement cylindrique, le premier embout (11) et le troisième embout (13) étant situés sur la surface latérale du corps principal (10), tandis que le deuxième embout (12) est situé à une extrémité du corps principal sensiblement cylindrique (10).

13. - Procédé de fonctionnement d'un filtre (1) pour traiter un fluide dans une tuyauterie, en particulier d'un réseau d'alimentation d'eau, ledit filtre (1) comprenant :
- un corps principal (10) comprenant au moins une chambre interne (10A) ;
- un élément filtrant (20) pour traiter le fluide, ledit élément filtrant (20) comprenant au moins un élément magnétique (21) reçu au moins partiellement dans ladite chambre (10A) et agencé pour intercepter et piéger les impuretés ferreuses qui sont présentes dans le fluide à traiter,
**caractérisé par le fait que**
ledit procédé comprend les étapes suivantes :
a) mesurer le champ magnétique généré par ledit au moins un élément magnétique (21) par l'intermédiaire d'au moins un détecteur magnétique (30) consistant en au moins un capteur magnétique associé audit corps principal (10) ;
b) traiter les informations concernant le champ magnétique mesuré, reçues en provenance dudit au moins un capteur magnétique, au moyen d'une unité de commande (40) associée audit au moins un capteur magnétique ;
c) fournir une indication sur la quantité d'impuretés qui se sont accumulées sur l'élément filtrant (20) au moyen de ladite unité de commande (40).

14. - Procédé selon la revendication 13, **caractérisé par le fait que** ladite étape c) est réalisée par l'intermédiaire d'une étape c1), dans laquelle ladite unité de commande (40) active un premier dispositif de signalisation (41) du type vidéo et/ou un second dispositif de signalisation (42) du type audio de façon à fournir à un utilisateur ladite indication sur la quantité d'impuretés qui se sont accumulées sur l'élément filtrant (20).

15. - Procédé selon une ou plusieurs des revendications 13 et 14, **caractérisé par le fait que** ladite étape c) est réalisée par l'intermédiaire d'une étape c2), dans laquelle ladite unité de commande (40) active des moyens d'émission/réception (43) afin de :
- envoyer l'indication, traitée par ladite unité de commande (40), sur la quantité d'impuretés qui se sont accumulées sur l'élément filtrant (20) à une station distante, et/ou
- répondre à tout moment à une interrogation de ladite station distante pour fournir ladite indication traitée par l'unité de commande (40), et/ou
- recevoir des instructions en provenance de ladite station distante.
